# EUROPEAN PATENT SPECIFICATION

(11) **EP 3 882 087 B1**
(45) Date of publication and mention of the grant of the patent: **04.05.2022**
(21) Application number: 21162825.0
(22) Date of filing: 16.03.2021
(51) Int. Cl.: B60R 16/03, B60R 16/02

(54) **ON-VEHICLE CONTROL SYSTEM AND CONTROLLING METHOD OF ON-VEHICLE CONTROL SYSTEM**
FAHRZEUGINTERNES STEUERUNGSSYSTEM UND STEUERUNGSVERFAHREN DES FAHRZEUGINTERNEN STEUERUNGSSYSTEMS
SYSTÈME DE COMMANDE EMBARQUÉ ET PROCÉDÉ DE COMMANDE DE SYSTÈME DE COMMANDE EMBARQUÉ

(30) Priority: 18.03.2020 JP 2020048394
(43) Date of publication of application: 22.09.2021
(73) Proprietor: Yazaki Corporation, Minato-ku Tokyo 108-8333 (JP)
(72) Inventor: HIRAMATSU, Ryo, Makinohara-shi, Shizuoka 421-0407 (JP); IWASAKI, Katsuyuki, Makinohara-shi, Shizuoka 421-0407 (JP)
(74) Representative: Grünecker Patent- und Rechtsanwälte PartG mbB

(56) References cited:
- WO-A1-99/26331
- JP-A- 2008 149 857
- JP-A- 2010 006 304
- JP-A- 2019 172 222
- US-A1- 2001 028 241
- US-A1- 2015 349 471

## Description

The present invention relates to an on-vehicle control system and a controlling method of an on-vehicle control system.

In general, a large number of electric components are mounted at various places on a vehicle such as an automobile. Such electric components include, for example, a load such as a motor, a heater, a lighting device, a relay, an electromagnetic valve, and an indicator, an input device such as a switch and a sensor, and various electronic control units (ECU) that control these electric components. Since the input device or each ECU also requires power supply, the input device or the ECU is a kind of load.

A power supply on a vehicle such as an on-vehicle battery and each ECU are usually connected with each other via a wire harness, and power is supplied from the power supply on the vehicle to each ECU via a power supply line of the wire harness. The ECUs are connected to one another via a communication line provided in the wire harness. Therefore, a plurality of ECUs can communicate with one another, and can be controlled to cooperate with one another.

Since each ECU usually includes a built-in control circuit such as a microcomputer, it is possible to perform a complicated control, and it is possible to flexibly handle a change in software built in each ECU in response to a change in an operating specification or the like.

On the other hand, since a large number of ECUs as described above are mounted on a vehicle, there will be various problems in order to optimize configurations and functions on the vehicle from various viewpoints.

For example, Patent Literature 1 discloses a seat belt control system showing a technique for unifying specifications of control ECUs. Specifically, a function of receiving a control signal and a function of outputting a drive signal are provided in electric connectors 2 and 4 installed between a control ECU 1 and seat belt motor units 3 and 5. Since a difference in variation between the seat belt motor units 3 and 5 caused by different types of seat belts SB and SB' can be absorbed by the electric connectors 2 and 4, the control ECU 1 only needs to output a control signal corresponding to a type of the seat belt motor units 3 and 5, and hardware specifications of control ECU 1 can be unified.

Patent Literature 2 discloses an electric seat for a vehicle showing a technique for improving a configuration of an electronic control unit that performs power supply distribution to a large number of loads mounted on the electric seat for a vehicle, eliminating a need for installation of a large number of fuses, optimizing power supply distribution, and facilitating insertion detection. Specifically, the electronic control unit that controls power supply distribution to a plurality of loads is installed on a seat. The electronic control unit includes a current measurement device that measures values of currents supplied to the loads and a failure detection device that determines, as a failure, a case where a current value measured by the current measurement device exceeds a threshold.

Patent Literature 3 discloses a vehicle seat control system showing a technique for notifying a user of a state change of a vehicle seat while preventing the number of components from increasing. Specifically, a vehicle seat control device 20 includes drive units 21 and 22 that are provided with motors 21a and 22a and change a state of a vehicle seat 10 by drive forces of the motors 21a and 22a, and ECUs 23 and 24 that adjust drive power supplied to the motors 21a and 22a by a PWM control. When the drive units 21 and 22 change a state of the vehicle seat 10, the ECUs 23 and 24 perform a sound generation operation for generating a sound in an audible range from the motors 21a, 22a in a manner of including a frequency in the audible range in a control frequency in the PWM control.

Patent Literature 1: JP-A-2006-69486
Patent Literature2: JP-A-2007-331716
Patent Literature3: JP-A-2019-172222

JP 2008 149857 A describes an interior environment control system for a vehicle. according to the preamble of claims 1 and 5. A high-level vehicle control system is connected to a plurality of lower-level control systems. The lower-level control systems each include an ECU, a drive unit, an operation unit and a sensor.

WO 99/26331 A1 discloses a control system in a vehicle for power and communication distribution. A central unit is split into structurally separate modules that each control a cable branch. The separate modules of the central unit include elements for low-level communication with the cable branch and elements for high-level communication between the modules.

A large number of functions of various types are mounted at a seat such as a driver seat on a vehicle. A type or the number of functions that are actually needed changes in accordance with a difference of vehicle types, a difference of grades, a difference of destinations, a difference of option selections of a user, and the like. Further, an operation of each function and the like may be changed when a design specification changes.

In order to meet a required specification as described above, for example, different ECUs of three types may be provided at a single seat. Alternatively, for example, two of the three ECUs are provided inside a seat cushion, and the other one is provided inside a seat back.

With such a configuration, a structure of a wire harness at a portion connecting an outer side of the seat and a plurality of ECUs on the seat or a wire harness at a portion connecting the plurality of ECUs on the seat tends to become complicated. Therefore, a work such as routing when the wire harness is assembled to a vehicle body may be complicated and labor intensive. Further, when the number of electric wires increases, a weight of the wire harness may increase, and component cost may increase.

In particular, when the seat has a movable structure corresponding to various posture changes, since a posture of the seat cushion relative to the seat back also changes, the number of electric wires of a wire harness connecting the seat cushion and the seat back increases and a structure becomes complicated, which greatly affects assemblability such as a routing work.

When various loads on the seat are operated in a state where a plurality of loads appropriately cooperate with one another, a high quality function of the entire vehicle can be provided to a user. However, when a structure of a wire harness connecting the plurality of ECUs is simplified, it is difficult to perform a control to appropriately cooperate the plurality of loads, and it is difficult to achieve a high quality function.

In order to incorporate all functions that may be required, it is inevitable that a structure of each of the ECUs becomes complicated and a structure of the wire harness also becomes complicated. When a plurality of ECUs of different types or a plurality of wire harnesses of different types are prepared in advance considering a difference of vehicle types, a difference of grades, a difference of destinations, a difference of option selections of a user, and the like, a structure may be prevented from becoming complicated. However, when types of ECUs and wire harnesses or the product number of products increases, it is inevitable that component cost increases, and an error is likely to occur in an assembly work or the like. On the other hand, when a common ECU and a common wire harness that incorporate all functions are adopted, it is necessary to incorporate in advance a discard function that discards one that is not actually used, and it is less likely to reduce component cost.

Since a plurality of independent ECUs of different types or functions are used at places of one seat, when a specification of each function is changed or when the presence or absence of each function is changed, each of the plurality of ECUs must correspond to each of the functions, and it is inevitable that a work becomes complicated. For example, software of computers built in the plurality of ECUs must be changed for each of the plurality of ECUs.

In an embodiment of an on-vehicle control system and a controlling method of an on-vehicle control system, a structure of a wire harness connecting ECUs and the like can be simplified and it is easy to add or change a function.

This is achieved by the features of claim 1 for an on-vehicle control system and by the features of claim 5 for a controlling method of an on-vehicle control system.

### BRIEF DESCRIPTION OF DRAWINGS

Fig. 1 is a block diagram schematically showing a layout of components of an on-vehicle control system according to an embodiment of the present invention when one vehicle seat is viewed from a side.
Fig. 2 is a block diagram showing main functional configurations of the on-vehicle control system shown in Fig. 1.
Fig. 3 is a flowchart showing an operation example of a seat main ECU.

### DESCRIPTION OF EMBODIMENTS

Specific embodiments according to the present invention will be described below with reference to the drawings.

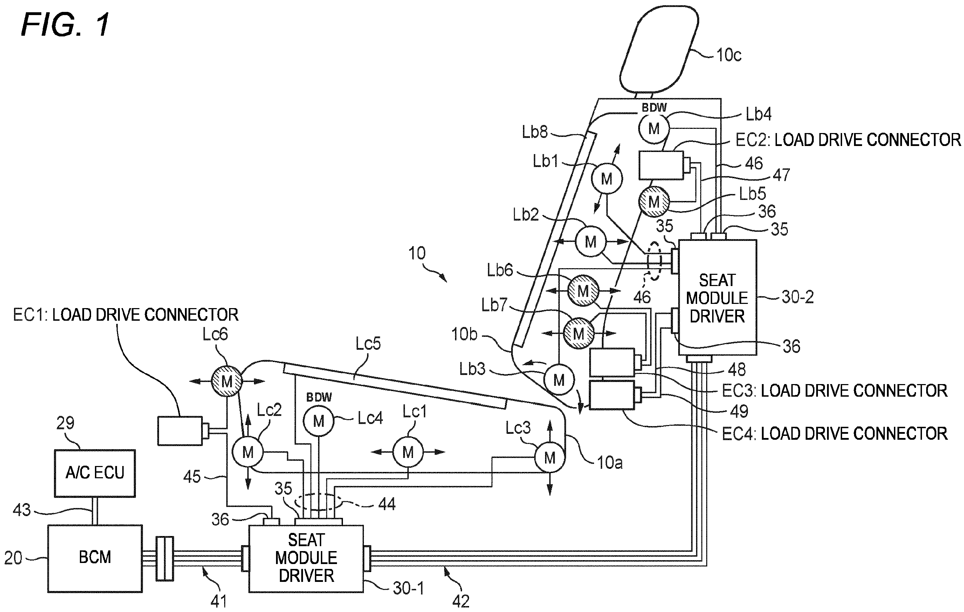

Fig. 1 schematically shows a layout of components of an on-vehicle control system according to an embodiment of the present invention when one vehicle seat is viewed from a side. The on-vehicle control system shown in Fig. 1 represents a control system of various on-vehicle electric components in one seat 10 used as a driver seat or the like of an automobile and a peripheral portion of the seat 10.

The seat 10 roughly includes a seat cushion 10a, a seat back 10b, and a headrest 10c. An upper face of the seat cushion 10a is a seating face for a driver.

The seat cushion 10a has a movable structure. The seat cushion 10a is slidable in a front-rear direction relative to a floor surface of a vehicle body that supports the seat cushion 10a, and can change a posture or the like. The seat back 10b is supported by a rear portion of the seat cushion 10a in a state of being slightly inclined, and has a structure capable of adjusting a posture such as an inclination angle. The seat back 10b can support a back of the driver from behind, and the headrest 10c can support an occipital region of the driver.

In an example in Fig. 1, seat cushion loads Lc1, Lc2, Lc3, Lc4, Lc5, and Lc6 are provided inside the seat cushion 10a to implement various functions.

The seat cushion load Lc1 is an electric motor that generates a drive force for sliding the seat cushion 10a in the front-rear direction. The seat cushion load Lc2 is an electric motor that generates a drive force for adjusting a vertical position of a front portion of the seat cushion 10a. The seat cushion load Lc3 is an electric motor that generates a drive force for adjusting a vertical position of a rear portion of the seat cushion 10a. The seat cushion load Lc4 is a blower motor. The seat cushion load Lc5 is a cushion heater. The seat cushion load Lc6 is an electric motor that generates a drive force for adjusting a posture of the seat cushion 10a other than those described above.

In the example in Fig. 1, seat back loads Lb1, Lb2, Lb3, Lb4, Lb5, Lb6, Lb7, and Lc8 are provided inside the seat back 10b to implement various functions.

The seat back load Lb 1 is an electric motor that generates a drive force for adjusting a height of the headrest 10c. The seat back load Lb2 is an electric motor for adjusting a position of a lumber support in the seat back in the front-rear direction. The seat back load Lb3 is an electric motor that generates a drive force for adjusting an inclination angle of the seat back. The seat back load Lb4 is a blower motor. The seat back load Lb6 is an electric motor that generates a drive force for adjusting a posture of a side support in the seat back. The seat back loads Lb5 and Lb7 are electric motors that generate drive forces for adjusting postures other than those described above. The seat back load Lb8 is a seat back heater.

In the example shown in Fig. 1, a seat module driver 30-1 is provided to drive the seat cushion loads Lc1, Lc2, Lc3, Lc4, Lc5, and Lc6 in the seat cushion 10a. A seat module driver 30-2 is provided to drive the seat back loads Lb1, Lb2, Lb3, Lb4, Lb5, Lb6, Lb7, and Lb8 in the seat back 10b.

The two seat module drivers 30-1 and 30-2 have the same configuration. The seat module driver 30-1 is provided inside or below the seat cushion 10a. The seat module driver 30-2 is provided inside the seat back 10b. Hereinafter, when there is no need to distinguish between the seat module driver 30-1 and the seat module driver 30-2, the seat module driver 30-1 and the seat module driver 30-2 will be described as the seat module driver 30.

Each of the seat cushion loads Lc1 to Lc5 in the seat cushion 10a is connected to a standard load connection unit 35 of the seat module driver 30-1 via a standard sub-hamess 44. The seat cushion load Lc6 in the seat cushion 10a is connected to an additional load connection unit 36 of the seat module driver 30-1 via an optional sub-harness 45.

A load drive connector EC1 is provided on the optional sub-hamess 45. Here, the "load drive connector" refers to a connector equipped with a relatively small electronic circuit. The "load drive connector" according to the present embodiment includes a driver circuit that controls energization in a minimum unit corresponding to a single load, and a multiplex communication circuit.

The seat back loads Lb1, Lb2, Lb3, Lb4, and Lb8 in the seat back 10b are connected to a standard load connection unit 35 of the seat module driver 30-2 via a standard sub-hamess 46.

The seat back loads Lb5, Lb6, and Lb7 are connected to an additional load connection unit 36 of the seat module driver 30-2 via independent optional sub-hamesses 47, 48, and 49, respectively. The optional sub-harnesses 47, 48, and 49 respectively include load drive connectors EC2, EC3, and EC4.

On the other hand, a body control module (BCM) 20 is mounted on the vehicle. The body control module 20 is an upper level ECU for controlling various electric components in the vehicle body.

The body control module 20 is connected to the seat module driver 30-1 via a wire harness 41. The seat module driver 30-1 is connected to the seat module driver 30-2 via a wire harness 42. The body control module 20 is connected to an A/C-ECU 29 via a wire harness 43.

Each of the wire harnesses 41, 42, and 43 includes a plurality of communication lines, a power supply line, and a ground line. Communication lines of each of the wire harnesses 41 and 42 form a communication bus corresponding to a multiplex communication standard such as controller area network (CAN) Therefore, the body control module 20 and the seat module driver 30-1 can communicate with each other via the communication lines of the wire harness 41. The body control module 20 and the seat module driver 30-2 can communicate with each other via the communication lines of the wire harnesses 41 and 42.

In the present embodiment, the body control module 20 has special functions for controlling the seat module drivers 30-1 and 30-2, and the seat cushion loads Lc1 to Lc6 and the seat back loads Lb1 to Lb8 located downstream of the seat module drivers 30-1 and 30-2.

### Functional Configuration Example

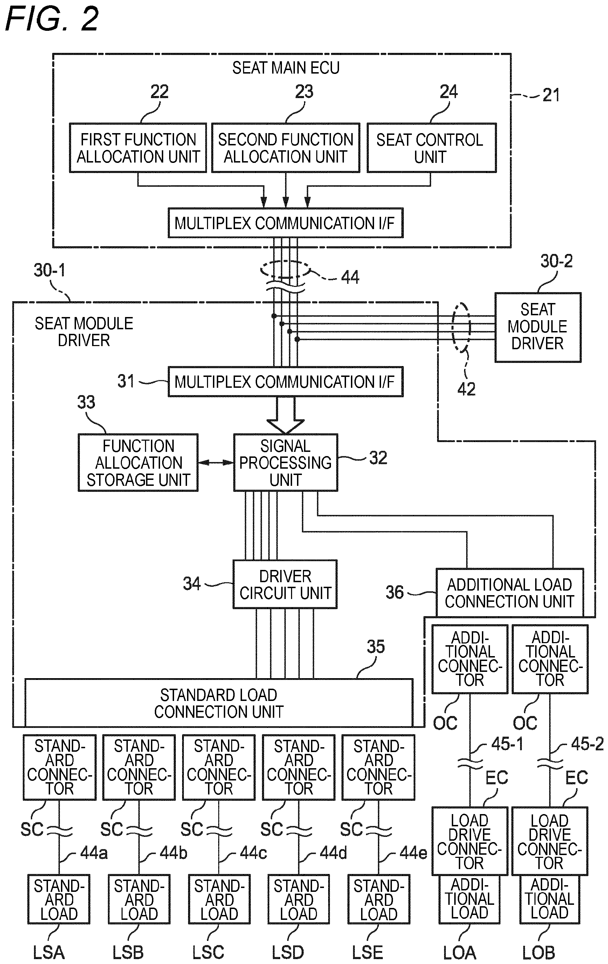

Fig. 2 shows a representative example of main functional configurations of the on-vehicle control system shown in Fig. 1. The seat main ECU 21 shown in Fig. 2 is a part of the body control module 20 in Fig. 1, and has a function of controlling various electric components at various places of the seat 10.

As shown in Fig. 2, the seat main ECU 21 includes a first function allocation unit 22, a second function allocation unit 23, a seat control unit 24, and a multiplex communication interface (IF) 25. The first function allocation unit 22, the second function allocation unit 23, and the seat control unit 24 are implemented by a microcomputer incorporated in the body control module 20 executing a program prepared in advance for each function.

The first function allocation unit 22 executes a processing of allocating, by communication, a "first function" necessary for appropriately controlling the seat cushion loads Lc1 to Lc6 to the seat module driver 30-1 in the seat cushion 10a to which the seat cushion loads Lc1 to Lc6 are connected.

The second function allocation unit 23 executes a processing of allocating, by communication, a "second function" necessary for appropriately controlling the seat back loads Lb 1 to Lb8 to the seat module driver 30-2 in the seat back 10b to which the seat back loads Lb 1 to Lb8 are connected.

The seat control unit 24 controls, by communication, the seat cushion loads Lc1 to Lc6 via the seat module driver 30-1, and controls, by communication, the seat back loads Lb 1 to Lb8 via the seat module driver 30-2. Since the seat control unit 24 can control all of the seat cushion loads Lc1 to Lc6 and the seat back loads Lb1 to Lb8, it is also easy to control the seat cushion loads Lc1 to Lc6 and the seat back loads Lb 1 to Lb8 to cooperate with one another.

The multiplex communication interface 25 has a multiplex communication function of a communication standard such as CAN That is, the first function allocation unit 22, the second function allocation unit 23, and the seat control unit 24 in the seat main ECU 21 can communicate with the seat module drivers 30-1 and 30-2 via communication lines of each of the multiplex communication interface 25 and the wire harness 41.

As shown in Fig. 2, the seat module driver 30-1 includes a multiplex communication interface 31, a signal processing unit 32, a function allocation storage unit 33, a driver circuit unit 34, the standard load connection unit 35, and the additional load connection unit 36.

The multiplex communication interface 31 has a multiplex communication function of a communication standard such as CAN That is, the multiplex communication interface 31 is used for the seat module driver 30-1 to communicate with the seat main ECU 21 via the communication lines of the wire harness 41.

The signal processing unit 32 communicates with the seat main ECU 21 via the multiplex communication interface 31, and interprets various commands, instructions, information, and the like transmitted from the seat main ECU 21 to execute a predetermined processing. Such a processing also includes an operation for the signal processing unit 32 to implement a function allocated as a command by the first function allocation unit 22 or the second function allocation unit 23 of the seat main ECU 21. Content of a processing normally executed by the signal processing unit 32 is determined by the function allocated in advance by the first function allocation unit 22 or the second function allocation unit 23.

The function allocation storage unit 33 is a non-volatile storage device, and acquires information of the "first function" or the "second function" allocated to the seat module driver 30 by the seat main ECU 21 via the multiplex communication interface 31 and the signal processing unit 32, and stores the information before the information is updated.

The signal processing unit 32 executes an operation for implementing the "first function" or the "second function" allocated to the seat module driver 30 based on the content of the information stored in the function allocation storage unit 33. For example, when the signal processing unit 32 receives an instruction from the seat control unit 24 for energizing the seat cushion load Lc5 at a duty of 50%, the signal processing unit 32 outputs, to a corresponding port, a control signal for turning on/off an internal circuit of the driver circuit unit 34 at a duty of 50% at a place where the seat cushion load Lc5 is connected. A correspondence relationship between a port number or control content associated with such a load and an instruction from the seat control unit 24 is stored in the function allocation storage unit 33 as information of the "first function" or the "second function".

The signal processing unit 32 may only include a general logic circuit, or may include a combination of hardware and software of a microcomputer. Content of software of the seat module driver 30-1 or the seat module driver 30-2 is fixed and no further change is made even when a microcomputer is used. That is, no further change is made for a specification of the seat module driver 30 even when a specification of the seat main ECU 21 is changed at the time of changing a design specification of the vehicle, or the like. When the content of the "first function" or the "second function" allocated by the seat main ECU 21 is changed, an operation of the signal processing unit 32 is also changed accordingly.

In the configuration example in Fig. 2, the driver circuit unit 34 includes five independent built-in driver circuits. Inputs of the driver circuits in the driver circuit unit 34 are respectively connected to different output ports of the signal processing unit 32. Outputs of the driver circuits in the driver circuit unit 34 can be respectively connected to different independent loads via the standard load connection unit 35. Each driver circuit in the driver circuit unit 34 has a built-in switching element such as a transistor that switches on and off states of energization among a power supply line, a load, and the ground. Each of the driver circuits in the driver circuit unit 34 can execute an energization on/off control or a duty control on a load basis.

Although the configuration example in Fig. 2 is a case where only a load that does not output a signal is connected to an output side of the driver circuit unit 34, a configuration or an operation of the driver circuit unit 34, the signal processing unit 32, and the like may be changed so that a load that outputs a signal, such as a sensor and a switch, can also be connected.

In the configuration example in Fig. 2, the standard load connection unit 35 includes a connector or a terminal connection unit that can individually or integrally connect five loads whose specifications are determined in advance. In the configuration example in Fig. 2, standard sub-harnesses 44a, 44b, 44c, 44d, and 44e each having a standard connector SC at one end are used to connect five independent standard loads LSA, LSB, LSC, LSD, and LSE to the standard load connection unit 35.

The standard loads LSA to LSE are less likely to be affected by a difference of vehicle types, a difference of grades, a difference of destinations, and the like, and refers to electric components that are highly likely to be mounted on a vehicle as a standard. For example, among the seat cushion loads Lc1 to Lc6 shown in Fig. 1, since the seat cushion loads Lc1 to Lc5 have a high mounting rate, the seat cushion loads Lc1 to Lc5 are connected to the standard load connection unit 35 as the standard loads LSA to LSE in Fig. 2.

In the configuration example in Fig. 2, the additional load connection unit 36 can connect two independent additional connectors OC each being used for connection with a single load. The additional load connection unit 36 is directly connected to two output ports of the signal processing unit 32. Therefore, when additional loads LOA and LOB are connected, a function corresponding to the driver circuit unit 34 and the additional loads LOA and LOB need to be added outside of the seat module driver 30-1.

In the configuration example in Fig. 2, the additional load LOA which is a single load is connected to the additional load connection unit 36 via an optional sub-harness 45-1. The additional load LOB which is a single load is connected to the additional load connection unit 36 via an optional sub-harness 45-2. Each of the optional sub-harnesses 45-1 and 45-2 has a load drive connector EC at one end.

The load drive connector EC is a connector having a small built-in electronic circuit. The electronic circuit includes a communication function corresponding to a multiplex communication standard such as CAN, a function of interpreting a command or an instruction to drive a load or the like, and a driver circuit for driving a single load. For example, a function for inputting and transmitting a signal output from a load including a sensor or a switch may be added to the load drive connector EC. An arrangement position of the load drive connector EC may be at an intermediate portion of each of the optional sub-harnesses 45-1 and 45-2.

Each of the additional loads LOA and LOB shown in Fig. 2 refers to a load of a type having a relatively low mounting rate to a vehicle. That is, various electric components adopted in a vehicle of a specific type, a vehicle of a specific grade, a vehicle taken to arrive at a specific destination, or the like, or various electric components that can be selected as options by a user are classified as the additional loads LOA and LOB since these electric components have a low mounting proportion among a total number of all vehicles.

Therefore, in a case of a standard vehicle in which the additional loads LOA and LOB are not mounted, the additional load connection unit 36 is not used, and there is no need to add the optional sub-harnesses 45-1 and 45-2 each having the load drive connector EC. Since there is no need to mount a function corresponding to the load drive connector EC at a place such as the driver circuit unit 34, a proportion of circuits to be discarded in the seat module driver 30 can be reduced.

In the example shown in Fig. 1, the seat cushion load Lc6 having a relatively low mounting rate is connected to the additional load connection unit 36 of the seat module driver 30-1 via the optional sub-hamess 45 as the additional load LOA or the like in Fig. 2. The seat back loads Lb5, Lb6, and Lb7 each having a relatively low mounting rate are individually connected to the additional load connection unit 36 of the seat module driver 30-2 via the optional sub-harnesses 47, 48, and 49, respectively. The optional sub-harnesses 45, 47, 48, and 49 respectively include the load drive connectors EC 1, EC2, EC3, and EC4.

An internal configuration and an operation of the seat module driver 30-2 are the same as those of the seat module driver 30-1. When the seat main ECU 21 allocates different functions to the seat module driver 30-1 and the seat module driver 30-2, an operation of the seat module driver 30-2 is different from an operation of the seat module driver 30-1.

That is, when a plurality of seat module drivers 30-1 and 30-2 having a common configuration are used, the seat main ECU 21 can allocate a required function to each of the seat module drivers 30-1 and 30-2. In practice, as shown in Fig. 1, the seat main ECU 21 allocates a "first function" necessary for controlling the seat cushion loads Lc1 to Lc6 to the seat module driver 30-1 installed at a place of the seat cushion 10a. Further, the seat main ECU 21 allocates a "second function" necessary for controlling the seat back loads Lb1 to Lb8 to the seat module driver 30-2 installed at a place of the seat back 10b.

### Main Operation Example

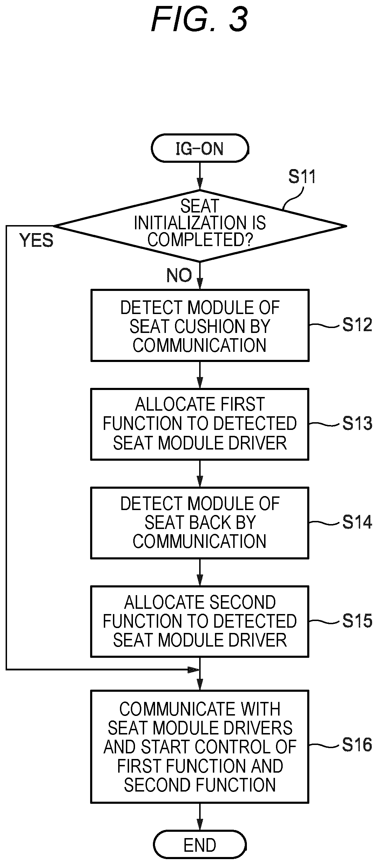

Fig. 3 shows an operation example of the seat main ECU 21. That is, when ignition of a vehicle is turned on (IG-ON), a microcomputer provided as hardware in the body control module 20 executes programs prepared in advance corresponding to the first function allocation unit 22, the second function allocation unit 23, and the seat control unit 24 so as to execute processings in steps S11 to S16 in Fig. 3. The operation in Fig. 3 will be described below.

The seat main ECU 21 identifies in step S11 whether initialization for using the seat module drivers 30-1 and 30-2 is completed. When the initialization is completed, the processing proceeds to S12. That is, it is confirmed in S11 whether an allocation processing of the first function allocation unit 22 and an allocation processing of the second function allocation unit 23 are completed. When functions of the first function allocation unit 22 and the second function allocation unit 23 are updated along with a specification change of the vehicle, the seat main ECU 21 determines that the initialization is not completed in S11, and proceeds to S12 again to execute initialization.

In S12, the first function allocation unit 22 communicates with the seat module drivers 30-1 and 30-2 via the multiplex communication interface 25 and the wire harness 41, and detects the seat module driver 30-1 provided at a place of the seat cushion 10a. For example, the seat module driver 30-1 having a specific ID associated with the place of the seat cushion 10a is detected in S12.

In S13, the first function allocation unit 22 allocates the "first function" to the specified seat module driver 30-1 detected in S12 by transmitting data prepared in advance to the seat module driver 30-1.

In this case, the seat module driver 30-1 writes data of the "first function" received from the seat main ECU 21 to the function allocation storage unit 33 via the multiplex communication interface 31 and the signal processing unit 32. Accordingly, the "first function" is allocated to the seat module driver 30-1, and functions required to drive the respective seat cushion loads Lc1 to Lc6 are prepared on the seat module driver 30-1.

In S14, the second function allocation unit 23 communicates with the seat module drivers 30-1 and 30-2 via the multiplex communication interface 25 and the wire harness 41, and detects the seat module driver 30-2 provided at a place of the seat back 10b. For example, the seat module driver 30-2 having a specific ID associated with the place of the seat back 10b is detected in S14.

In S15, the second function allocation unit 23 allocates the "second function" to the specified seat module driver 30-2 detected in S14 by transmitting data prepared in advance to the seat module driver 30-2.

In this case, the seat module driver 30-2 writes data of the "second function" received from the seat main ECU 21 to the function allocation storage unit 33 via the multiplex communication interface 31 and the signal processing unit 32. Accordingly, the "second function" is allocated to the seat module driver 30-2, and functions required to drive the respective seat back loads Lb1 to Lb8 are prepared on the seat module driver 30-2.

When seat initialization including S12 to S15 is completed, the seat control unit 24 in the seat main ECU 21 executes subsequent S16. That is, the seat control unit 24 communicates with the seat module drivers 30-1 and 30-2 via the multiplex communication interface 25 and the wire harness 41, and starts a control of the "first function" for the seat module driver 30-1 and a control of the "second function" for the seat module driver 30-2.

As described above, since the on-vehicle control system shown in Fig. 1 and Fig. 2 uses a plurality of seat module drivers 30-1 and 30-2 having a common configuration and a common basic operation, it is easy to reduce component cost, simplify a connection structure of a wire harnesses, and reduce the number of electric wires. Since the seat main ECU 21 in the body control module 20 allocates an appropriate function to each of the plurality of seat module drivers 30-1 and 30-2, various design specifications can be changed by changing software or the like of the seat main ECU 21.

For example, when a new electric component is to be added to the seat 10, since the electric component can be directly connected to the seat module driver 30-1 or the seat module driver 30-2, there is no need to add a new ECU to the system. Therefore, there is no need to increase the number of electric wires in the wire harness 41 at a portion connecting the seat main ECU 21 and the seat 10, or the number of electric wires in the wire harness 42 at a portion crossing the seat cushion 10a and the seat back 10b. Therefore, workability at the time of assembling the wire harnesses 41, 42, and the like to the seat 10 is improved.

For example, the number of driver circuits built in the driver circuit unit 34, the total number of standard connectors SC that can be connected to the standard load connection unit 35, the total number of additional connectors OC that can be connected to the additional load connection unit 36, and the like may be individually determined in each of the plurality of seat module drivers 30-1 and 30-2. When the configuration of the seat module driver 30-1 and the configuration of the seat module driver 30-2 are completely the same, it is highly likely to further reduce component cost or manufacturing cost of the entire system.

Since control functions of all electric components of the seat including the two seat module drivers 30-1 and 30-2 are integrated in the seat main ECU 21 in the body control module 20, it is easy to execute a control so as to cooperate a load operation at a seat cushion 10a side and a load operation at a seat back 10b side. It is easy to execute an appropriate control with high accuracy according to a posture or a position of a driver or the like.

In the on-vehicle control system shown in Fig. 1 and Fig. 2, since functions for driving the additional loads LOA and LOB having a low mounting rate are provided outside the driver circuit unit 34, the number of circuits or the number of components that are highly likely to be discarded can be reduced, and component cost of the seat module drivers 30-1 and 30-2 can be reduced. Since the additional loads LOA and LOB having a low mounting rate can be individually connected to the seat module drivers 30-1 and 30-2 by using the optional sub-harness 45 on a single load basis, various specification changes can be made. Since a configuration of the optional sub-hamess 45 including the load drive connector EC is simplified, a cost increase can be prevented when an optional component is added.

An on-vehicle control system according to an embodiment includes
a plurality of lower level control units (seat module drivers 30-1 and 30-2) each including a driver circuit (driver circuit unit 34) capable of driving each of a plurality of loads and a multiplex communication circuit (multiplex communication interface 31),
an upper level control unit (seat main ECU 21) that is connected with each of the plurality of lower level control units via a predetermined communication line (wire harness 41) and controls the plurality of lower level control units.

At least a first lower level control unit (seat module driver 30-1) and a second lower level control unit (seat module driver 30-2) are connected as the plurality of lower level control units.

The upper level control unit includes a function allocation unit (first function allocation unit 22 and second function allocation unit 23) that allocates a first function to the first lower level control unit and allocates a second function to the second lower level control unit, and a master control unit (seat control unit 24) that controls the first function and the second function by communication.

Each of the lower level control units includes a function execution unit (signal processing unit 32, function allocation storage unit 33, and driver circuit unit 34) that controls each downstream load according to the function allocated by the upper level control unit.

According to the on-vehicle control system having the above configuration, a specification of the first function to be allocated to the first lower level control unit can be determined by the first upper level control unit as needed. A specification of the second function to be allocated to the second lower level control unit can be determined by the upper level control unit as needed. Therefore, for example, when a design specification is changed, it is possible to deal with a software change of the upper level control unit only without the need for a work of changing each of the plurality of lower level control units. Configurations or basic operations of the lower level control units are standardized so as to implement a function corresponding to an instruction from the upper level control unit, and the number of electric wires of the wire harness required for connection is reduced. Since the upper level control unit controls each of the plurality of lower level control units, it is easy to control a plurality of loads respectively connected to the plurality of lower level control units in a cooperated state.

In the on-vehicle control system, each of the plurality of lower level control units may be internally provided with the driver circuit, the multiplex communication circuit, and the function execution unit, and the driver circuit, the multiplex communication circuit, and the function execution unit may respectively have a common hardware configuration for the plurality of lower level control units.

According to the on-vehicle control system having the above configuration, since components of the lower level control units have a common configuration, it is likely to reduce the product number of products and reduce component cost. Since the plurality of lower level control units having a common configuration are used, erroneous component selection during assembly or an erroneous assembly position can be prevented and workability is improved.

In the on-vehicle control system, each of the lower level control units may include one or more individual connection interfaces (signal processing unit 32 and additional load connection unit 36) that allow connection of a single module (optional sub-harness 45 and load drive connector EC) corresponding to a single load drive.

According to the on-vehicle control system having the above configuration, for example, when one optional load is added and connected, only one (minimum) load side module may be connected to an individual connection interface. Therefore, an increase in components along with a configuration change can be prevented and an increase in component cost can be prevented. That is, even when dealing with the presence or absence of optional loads of various specifications, redundant components to be discarded can be reduced, and component cost can be reduced.

In the on-vehicle control system, the first lower level control unit may be provided in the vicinity of a seating face (seat cushion 10a) of one seat on a vehicle,
the second lower level control unit may be provided on a seat back (10b) of the seat, and
the first lower level control unit and the second lower level control unit, and the first lower level control unit and the upper level control unit are connected by a wire harness (42) including communication lines.

According to the controlling method of an on-vehicle control system having the above configuration, various loads provided inside the seat cushion or the like can be controlled using the first lower level control unit. Various loads provided inside the seat back or the like can be controlled using the second lower level control unit. Since the first lower level control unit and the second lower level control unit are connected by a predetermined wire harness, a structure of the wire harness at a portion connecting the seat back and the seat cushion each serving as a movable portion can be simplified, and workability such as routing and assembly can be improved.

According to an embodiment, a controlling method of an on-vehicle control system that is a control method for controlling an on-vehicle system includes a plurality of lower control units each having a driver circuit capable of individually driving each of a plurality of loads and a multiplex communication circuit, and an upper level control unit that is connected with each of the plurality of lower level control units via a predetermined communication line and controls the plurality of lower level control units. The controlling method of an on-vehicle control system includes
in a state where at least a first lower level control unit and a second lower level control unit are connected as the plurality of lower level control units,
the upper level control unit allocating a first function to the first lower level control unit and allocating a second function to the second lower level control unit,
each of the lower level control units controlling each downstream load according to the function allocated by the upper level control unit, and
the upper level control unit controlling the first function and the second function by communication.

According to the controlling method of an on-vehicle control system having the above configuration, a specification of the first function to be allocated to the first lower level control unit can be determined by the upper level control unit as needed. A specification of the second function to be allocated to the second lower level control unit can be determined by the upper level control unit as needed. Therefore, for example, when a design specification is changed, it is possible to deal with a software change of the upper level control unit only without the need for a work of changing each of the plurality of lower level control units. Configurations or basic operations of the lower level control units are standardized so as to implement a function corresponding to an instruction from the upper level control unit, and the number of electric wires of the wire harness required for connection is reduced. Since the upper level control unit controls each of the plurality of lower level control units, it is easy to control a plurality of loads respectively connected to the plurality of lower level control units in a cooperated state.

According to the on-vehicle control system and the controlling method of an on-vehicle control system of an embodiment, a structure of a wire harness connecting the ECUs or the like can be simplified, and it is easy to add or change a function.

## Claims

1. An on-vehicle control system comprising:
a plurality of lower level control units (30-1, 30-2) each including a driver circuit (34) capable of individually driving each of a plurality of loads (LSA to LSE); and
an upper level control unit (21) that is connected with each of the plurality of lower level control units (30-1, 30-2) via a predetermined communication line (41) and controls the plurality of lower level control units (30-1, 30-2),
wherein at least a first lower level control unit (30-1) and a second lower level control unit (30-2) are connected as the plurality of lower level control units (30-1, 30-2),
the plurality of lower level control units (30-1, 30-2) each include a multiplex communication circuit (31);
the upper level control unit (21) includes a function allocation unit (22, 23) that allocates a first function to the first lower level control unit (30-1) and allocates a second function to the second lower level control unit (30-2), and a master control unit (24) that controls the first function and the second function by communication;
each of the lower level control units (30-1, 30-2) includes a function execution unit (32, 33, 34) that controls each downstream load (LSA to SDE) according to the function allocated by the upper level control unit (21); **characterized in that**:
each of the first lower level control unit (30-1) and the second lower level control unit (30-2) has a standard load connection unit (35) to each of which the downstream load (LSA to LSE) is connected, and has an additional load connection unit (36) to which an additional load (LOA, LOB) is connected; and
the additional load connection unit (36) is connected to the additional load (LOA, LOB) via an external driver (EC).

2. The on-vehicle control system according to claim 1,
wherein each of the plurality of lower level control units (30-1, 30-2) is internally provided with the driver circuit (34), the multiplex communication circuit (31), and the function execution unit (32, 33, 34), and
wherein the driver circuit (34), the multiplex communication circuit (31), and the function execution unit (32, 33, 34) respectively have a common hardware configuration for the plurality of lower level control units (30-1, 30-2).

3. The on-vehicle control system according to claim 1 or 2,
wherein each of the lower level control units (30-1, 30-2) includes one or more individual connection interfaces (32, 36) that allow connection of a single module (45, EC1) corresponding to a single load drive (LOA).

4. The on-vehicle control system according to any one of claims 1 to 3,
wherein the first lower level control unit (30-1) is provided in the vicinity of a seating face (10a) of one seat (10) on a vehicle,
wherein the second lower level control unit (30-2) is provided on a seat back (10b) of the seat (10), and
wherein the first lower level control unit (30-1) and the second lower level control unit (30-2), and the first lower level control unit (30-1) and the upper level control unit (21) are connected by a wire harness (42) including communication lines.

5. A controlling method of an on-vehicle control system that is a control method for controlling an on-vehicle system including a plurality of lower control units (30-1, 30-2) each having a driver circuit (34) capable of individually driving each of a plurality of loads (LSA to LSE), and an upper level control unit (21) that is connected with each of the plurality of lower level control units (30-1, 30-2) via a predetermined communication line (41) and controls the plurality of lower level control units (30-1, 30-2), the controlling method of an on-vehicle control system comprising:
in a state where at least a first lower level control unit (30-1) and a second lower level control unit (30-2) are connected as the plurality of lower level control units (30-1, 30-2),
the plurality of lower level control units (30-1, 30-2) each include a multiplex communication circuit (31);
the upper level control unit (21) allocating a first function to the first lower level control unit (30-1) and allocating a second function to the second lower level control unit (30-2);
each of the lower level control units (30-1, 30-2) controlling each downstream load (LSA to LSE) according to the function allocated by the upper level control unit (21); and
the upper level control unit (21) controlling the first function and the second function by communication, wherein
**characterized in that**:
each of the first lower level control unit (30-1) and the second lower level control unit (30-2) has a standard load connection unit (35) to each of which the downstream load (LSA to LSE) is connected, and has an additional load connection unit (36) to which an additional load (LOA, LOB) is connected; and
the additional load connection unit (36) is connected to the additional load (LOA, LOB) via an external driver (EC).

## Patentansprüche

1. Fahrzeuginternes Steuerungssystem, das umfasst:
eine Vielzahl von Steuerungs-Einheiten (30-1, 30-2) der unteren Ebene, die jeweils eine Ansteuerungsschaltung (34) enthalten, die in der Lage ist, jede einer Vielzahl von Lasten (LSA bis LSE) individuell anzusteuern; sowie
eine Steuerungs-Einheit (21) der oberen Ebene, die mit jeder der Vielzahl von Steuerungs-Einheiten (30-1, 30-2) der unteren Ebene über eine vorgegebene Kommunikationsleitung (41) verbunden ist und die Vielzahl von Steuerungs-Einheiten (30-1, 30-2) der unteren Ebene steuert,
wobei wenigstens eine erste Steuerungs-Einheit (30-1) der unteren Ebene und eine zweite Steuerungs-Einheit (30-2) der unteren Ebene als die Vielzahl von Steuerungs-Einheiten (30-1, 30-2) der unteren Ebene verbunden sind,
die Vielzahl von Steuerungs-Einheiten (30-1, 30-2) der unteren Ebene jeweils eine Multiplex-Kommunikationsschaltung (31) enthalten;
die Steuerungs-Einheit (21) der oberen Ebene eine Funktionszuweisungs-Einheit (22, 23), die der ersten Steuerungs-Einheit (30-1) der unteren Ebene eine erste Funktion zuweist und der zweiten Steuerungs-Einheit (30-2) der unteren Ebene eine zweite Funktion zuweist, sowie eine Haupt-Steuerungs-Einheit (24) einschließt, die die erste Funktion und die zweite Funktion mittels Kommunikation steuert;
jede der Steuerungs-Einheiten (30-1, 30-2) der unteren Ebene eine Funktionsausführungs-Einheit (32, 33, 34) einschließt, die jede nachgeschaltete Last (LSA bis SDE) entsprechend der von der Steuerungs-Einheit der oberen Ebene (21) zugewiesenen Funktion steuert; **dadurch gekennzeichnet, dass:**
die erste Steuerungs-Einheit (30-1) der unteren Ebene und die zweite Steuerungs-Einheit (30-2) der unteren Ebene jeweils eine Standard-Lastverbindungs-Einheit (35) aufweisen, mit der jeweils die nachgeschaltete Last (LSA bis LSE) verbunden ist, und eine zusätzliche Lastverbindungs-Einheit (36) aufweisen, mit der eine zusätzliche Last (LOA, LOB) verbunden ist; und
die zusätzliche Lastverbindungs-Einheit (36) über eine externe Ansteuerungseinrichtung (EC) mit der zusätzlichen Last (LOA, LOB) verbunden ist.

2. Fahrzeuginternes Steuerungssystem nach Anspruch 1,
wobei jede der Vielzahl von Steuerungs-Einheiten (30-1, 30-2) der unteren Ebene intern mit der Ansteuerungsschaltung (34), der Multiplex-Kommunikationsschaltung (31) sowie der Funktionsausführungs-Einheit (32, 33, 34) versehen ist, und
die Ansteuerungsschaltung (34), die Multiplex-Kommunikationsschaltung (31) und die Funktionsausführungs-Einheit (32, 33, 34) jeweils eine gemeinsame Hardwarekonfiguration für die Vielzahl von Steuerungs-Einheiten (30-1, 30-2) der unteren Ebene aufweisen.

3. Fahrzeuginternes Steuerungssystem nach Anspruch 1 oder 2,
wobei jede der Steuerungs-Einheiten (30-1, 30-2) der unteren Ebene eine oder mehrere individuelle Verbindungsschnittstelle/n (32, 36) enthält, die Verbindung eines einzelnen Moduls (45, EC1) zulassen, das einer einzelnen Last-Ansteuerungseinrichtung (LOA) entspricht.

4. Fahrzeuginternes Steuerungssystem nach einem der Ansprüche 1 bis 3,
wobei die erste Steuerungs-Einheit (30-1) der unteren Ebene in der Nähe einer Sitzfläche (10a) eines Sitzes (10) in einem Fahrzeug vorhanden ist,
die zweite Steuerungs-Einheit (30-2) der unteren Ebene an einer Sitzlehne (10b) des Sitzes (10) vorhanden ist, und
die erste Steuerungs-Einheit (30-1) der unteren Ebene sowie die zweite Steuerungs-Einheit (30-2) der unteren Ebene und die erste Steuerungs-Einheit (30-1) der oberen Ebene sowie die Steuerungs-Einheit (21) der oberen Ebene über einen Kabelbaum (42) verbunden sind, der Kommunikationsleitungen einschließt.

5. Steuerungsverfahren eines fahrzeuginternen Steuerungssystems, das ein Steuerungsverfahren zum Steuern eines fahrzeuginternen Systems ist, das eine Vielzahl von Steuerungs-Einheiten (30-1, 30-2) der unteren Ebene, die jeweils eine Ansteuerungsschaltung (34) enthalten, die in der Lage ist, jede einer Vielzahl von Lasten (LSA bis LSE) individuell anzusteuern, sowie eine Steuerungs-Einheit (21) der oberen Ebene einschließt, die mit jeder der Vielzahl von Steuerungs-Einheiten (30-1, 30-2) der unteren Ebene über eine vorgegebene Kommunikationsleitung (41) verbunden ist und die Vielzahl von Steuerungs-Einheiten (30-1, 30-2) der unteren Ebene steuert, wobei das Steuerungsverfahren eines fahrzeuginternen Steuerungssystems umfasst, dass:
in einem Zustand, in dem wenigstens eine erste Steuerungs-Einheit (30-1) der unteren Ebene und eine zweite Steuerungs-Einheit (30-2) der unteren Ebene als die Vielzahl von Steuerungs-Einheiten (30-1, 30-2) der unteren Ebene verbunden sind,
die Vielzahl von Steuerungs-Einheiten (30-1, 30-2) der unteren Ebene jeweils eine Multiplex-Kommunikationsschaltung (31) enthalten;
wobei die Steuerungs-Einheit (21) der oberen Ebene der ersten Steuerungs-Einheit (30-1) der unteren Ebene eine erste Funktion zuweist und der zweiten Steuerungs-Einheit (30-2) der unteren Ebene eine zweite Funktion zuweist;
jede der Steuerungs-Einheiten (30-1, 30-2) der unteren Ebene jede nachgeschaltete Last (LSA bis LSE) entsprechend der von der Steuerungs-Einheit (21) der oberen Ebene zugewiesenen Funktion steuert; und
die Steuerungs-Einheit (21) der oberen Ebene die erste Funktion und die zweite Funktion mittels Kommunikation steuert,
**dadurch gekennzeichnet, dass:**
die erste Steuerungs-Einheit (30-1) der unteren Ebene und die zweite Steuerungs-Einheit (30-2) der unteren Ebene jeweils eine Standard-Lastverbindungs-Einheit (35) aufweisen, mit der jeweils die nachgeschaltete Last (LSA bis LSE) verbunden ist, und eine zusätzliche Lastverbindungs-Einheit (36) aufweisen, mit der eine zusätzliche Last (LOA, LOB) verbunden ist; und
die zusätzliche Lastverbindungs-Einheit über eine externe Ansteuerungseinrichtung (EC) mit der zusätzlichen Last (LOA, LOB) verbunden ist.

## Revendications

1. Système de contrôle embarqué, comprenant :
une pluralité d'unités de contrôle de niveau inférieur (30-1, 30-2) comprenant chacune un circuit de pilotage (34) capable de piloter individuellement chaque charge d'une pluralité de charges (LSA à LSE) ; et
une unité de contrôle de niveau supérieur (21) qui est connectée à chaque unité de la pluralité d'unités de contrôle de niveau inférieur (30-1, 30-2) via une ligne de communication prédéterminée (41) et qui contrôle la pluralité d'unités de contrôle de niveau inférieur (30-1, 30-2),
dans lequel au moins une première unité de contrôle de niveau inférieur (30-1) et une deuxième unité de contrôle de niveau inférieur (30-2) sont connectées pour constituer ladite pluralité d'unités de contrôle de niveau inférieur (30-1, 30-2),
les unités de la pluralité d'unités de contrôle de niveau inférieur (30-1, 30-2) comprennent chacune un circuit de communication multiplex (31) ;
l'unité de contrôle de niveau supérieur (21) comprend une unité d'attribution de fonction (22, 23) qui attribue une première fonction à la première unité de contrôle de niveau inférieur (30-1) et attribue une deuxième fonction à la deuxième unité de contrôle de niveau inférieur (30-2), et une unité de contrôle maîtresse (24) qui contrôle la première fonction et la deuxième fonction par une communication ;
chacune des unités de contrôle de niveau inférieur (30-1, 30-2) comprend une unité d'exécution de fonction (32, 33, 34) qui contrôle chaque charge en aval (LSA à SDE) conformément à la fonction attribuée par l'unité de contrôle de niveau supérieur (21) ;
**caractérisé en ce que** :
chaque unité parmi la première unité de contrôle de niveau inférieur (30-1) et la deuxième unité de contrôle de niveau inférieur (30-2) comporte une unité de connexion de charge standard (35) à chacune desquelles est connectée la charge en aval (LSA à LSE), et comporte une unité de connexion de charge additionnelle (36) à laquelle est connectée une charge additionnelle (LOA, LOB) ; et
l'unité de connexion de charge additionnelle (36) est connectée à la charge additionnelle (LOA, LOB) via un pilote externe (EC).

2. Système de contrôle embarqué selon la revendication 1,
dans lequel, à l'intérieur de chaque unité de la pluralité d'unités de contrôle de niveau inférieur (30-1, 30-2), sont pourvus le circuit de pilotage (34), le circuit de communication multiplex (31) et l'unité d'exécution de fonction (32, 33, 34), et
dans lequel le circuit de pilotage (34), le circuit de communication multiplex (31) et l'unité d'exécution de fonction (32, 33, 34) présentent respectivement une configuration matérielle commune pour la pluralité d'unités de contrôle de niveau inférieur (30-1, 30-2).

3. Système de contrôle embarqué selon la revendication 1 ou 2,
dans lequel chacune des unités de contrôle de niveau inférieur (30-1, 30-2) comprend une ou plusieurs interfaces de connexion individuelle (32, 36) qui permettent une connexion d'un module unique (45, EC1) correspondant à un pilote de charge unique (LOA).

4. Système de contrôle embarqué selon l'une quelconque des revendications 1 à 3,
dans lequel la première unité de contrôle de niveau inférieur (30-1) est pourvue à proximité d'une face de siège (10a) d'un siège (10) de véhicule,
dans lequel la deuxième unité de contrôle de niveau inférieur (30-2) est pourvue sur un dos de siège (10b) du siège (10), et
dans lequel la première unité de contrôle de niveau inférieur (30-1) et la deuxième unité de contrôle de niveau inférieur (30-2), et la première unité de contrôle de niveau inférieur (30-1) et l'unité de contrôle de niveau supérieur (21) sont connectées par un faisceau de câbles (42) comprenant des lignes de communication.

5. Procédé de contrôle d'un système de contrôle embarqué, qui est un procédé de contrôle pour contrôler un système embarqué comprenant une pluralité d'unités de contrôle de niveau inférieur (30-1, 30-2) comportant chacune un circuit de pilotage (34) capable de piloter individuellement chaque charge d'une pluralité de charges (LSA à LSE), et une unité de contrôle de niveau supérieur (21) qui est connectée à chaque unité de la pluralité d'unités de contrôle de niveau inférieur (30-1, 30-2) via une ligne de communication prédéterminée (41) et qui contrôle la pluralité d'unités de contrôle de niveau inférieur (30-1, 30-2), le procédé de contrôle d'un système de contrôle embarqué comprenant :
dans un état dans lequel au moins une première unité de contrôle de niveau inférieur (30-1) et une deuxième unité de contrôle de niveau inférieur (30-2) sont connectées pour constituer ladite pluralité d'unités de contrôle de niveau inférieur (30-1, 30-2),
l'inclusion, par chacune des unités de la pluralité d'unités de contrôle de niveau inférieur (30-1, 30-2), d'un circuit de communication multiplex (31) ;
l'attribution, par l'unité de contrôle de niveau supérieur (21), d'une première fonction à la première unité de contrôle de niveau inférieur (30-1) et d'une deuxième fonction à la deuxième unité de contrôle de niveau inférieur (30-2) ;
le contrôle, par chacune des unités de contrôle de niveau inférieur (30-1, 30-2), de chaque charge en aval (LSA à LSE) conformément à la fonction attribuée par l'unité de contrôle de niveau supérieur (21) ; et
le contrôle, par l'unité de contrôle de niveau supérieur (21), de la première fonction et de la deuxième fonction par communication,
**caractérisé en ce que** :
chaque unité parmi la première unité de contrôle de niveau inférieur (30-1) et la deuxième unité de contrôle de niveau inférieur (30-2) comporte une unité de connexion de charge standard (35) à chacune desquelles est connectée la charge en aval (LSA à LSE), et comporte une unité de connexion de charge additionnelle (36) à laquelle est connectée une charge additionnelle (LOA, LOB) ; et
l'unité de connexion de charge additionnelle (36) est connectée à la charge additionnelle (LOA, LOB) via un pilote externe (EC).
